# EUROPEAN PATENT SPECIFICATION

(11) **EP 2 662 293 B1**
(45) Date of publication and mention of the grant of the patent: **25.06.2014**
(21) Application number: 13166087.0
(22) Date of filing: 30.04.2013
(51) Int. Cl.: B65B 21/00, B65B 35/24, B65G 47/08, B65G 47/26, B65G 47/64, B65G 57/22

(54) **System for package handling**
System zur Behandlung von Verpackungen
Système de manipulation d'emballages

(30) Priority: 07.05.2012 IT PR20120026
(43) Date of publication of application: 13.11.2013
(73) Proprietor: Gea Procomac S.p.A., 43038 Sala Baganza (PR) (IT)
(72) Inventor: Bolzani, Dante, 43029 TRAVERSETOLO (PR) (IT)
(74) Representative: Gotra, Stefano

(56) References cited:
- WO-A1-01/27008
- WO-A1-01/51390
- FR-A1- 2 228 697
- FR-A1- 2 792 921
- FR-A1- 2 849 647
- JP-A- 10 077 114
- US-A- 3 442 400
- US-A1- 2006 175 179

## Description

The object of the present invention is a system for package handling typically utilized for forming a layer of packages to be palletized.

Systems utilized for forming layers of packaged lots (or packages) prior to stacking them on a pallet are known in the prior art.

Generally, in order to simplify transport operations, the individually packaged products are then grouped and packaged in packages having easily manoeuvrable shapes such as to optimize the space occupied. A classic example of "primary" and "secondary" packaging is found in beverage distribution, in which beverages are first packaged in bottles (or cans) and then packaged in packs comprising a predetermined number of bottles (or cans), typically six, twelve or twenty-four. The packages obtained are handled and oriented so as to form layers, which are transferred onto a pallet and stacked one over the other.

In the currently known palletization systems, the packages coming from a feed unit undergo various procedures, including selection, allotting, positioning and/or orienting according to pre-established layouts, grouping in layers and stacking of the layers.

In particular, for the purpose of reciprocally orienting the various packages, palletization systems comprise:
- a line for conveying the packages;
- a layer-preforming area, in which there is at least a movable head that moves the various packages transversely to the direction of advancement, also performing, if required, rotation of the package about a vertical axis;
- a compaction area, in which the packages are compacted along a direction of advancement and perpendicularly to the direction of advancement.

This solution is not without drawbacks related to the fact that, for the purpose of realizing the preselected layouts, the movable head must move the packages, individually or in groups of two or three packages, perpendicularly to the direction of advancement along the conveyor line. As a result, in somme cases the movable head is forced to carry out intensive work and may become a point that slows down the system.

A package handling system employing two hinged guides is also known from US3442400. The document FR2228697 instead illustrates two belts that are movable for the purpose of receiving packages coming from different rows or lines.

Another solution, shown in JP10077114, discloses a metering apparatus with a single conveyor (C1) able to move laterally along the entrance front. In this context, the technical task underlying the present invention is to propose a system for package handling that overcomes the drawbacks of the prior art cited hereinabove.

In particular, the aim of the present invention is to make available a system for package handling that permits a higher production velocity.

The defined technical task and the specified aims are substantially achieved by a system for handling packages, comprising the technical characteristics recited in one or more of the appended claims.

Further characteristics and advantages of the present invention will become more apparent from the approximate, and thus non-limiting, description of a preferred, but not exclusive, embodiment of a system for handling packages, as illustrated in the accompanying drawings, in which:
- Figure 1 is a plan view of the system in a first configuration according to the present invention;
- Figure 2 is a plan view of the system in a second configuration according to the present invention;

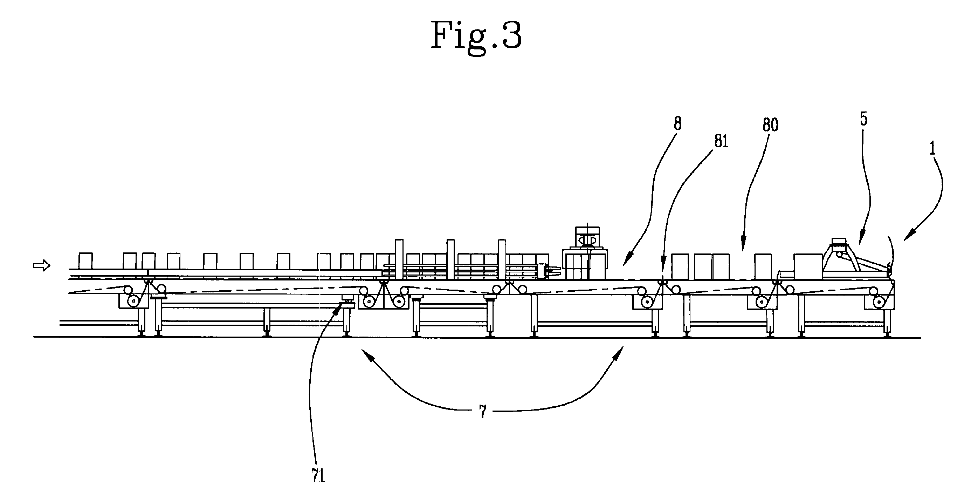

- Figure 3 is a side view of the system according to the present invention.

In the accompanying figures, the reference number 1 is used to indicate a system for package handling. The system is typically incorporated in a system for forming a layer of packages to be palletized. Typically, but not necessarily, the packages are substantially parallelepipeds.

The packages in the system 1 move following at least one feed line.

The system 1 comprises:
- a first means 2 for supporting and conveying packages;
- a second means 3 for supporting and conveying packages.

The first supporting and conveying means 2 are part of an arrival zone for packages arriving from the production line. The first means 2 typically comprises a conveyor belt (however, in an alternative non-preferred solution, it could also be a set of side-by-side rollers).

The second supporting and conveying means 3 is located downstream of the first supporting and conveying means 2. The first and second supporting and conveying means 2, 3 conveniently develop paths that remain unchanged over time.

The second means 3 for supporting and conveying packages comprises an entrance front 30. The second supporting and conveying means 3 comprises a conveyor that can be split. For example the conveyor could comprise a first and a second conveyor 310, 320 that are located side by side and are adjacent; should the first and the second conveyor 310, 320 be moving at the same velocity, they will behave as a single conveyor. Alternatively, they behave as two separate conveyors. Preferably, the second conveying means 3 comprises one or more belt conveyors. For example, the first and the second conveyor 310, 320 described above may be belt conveyors.

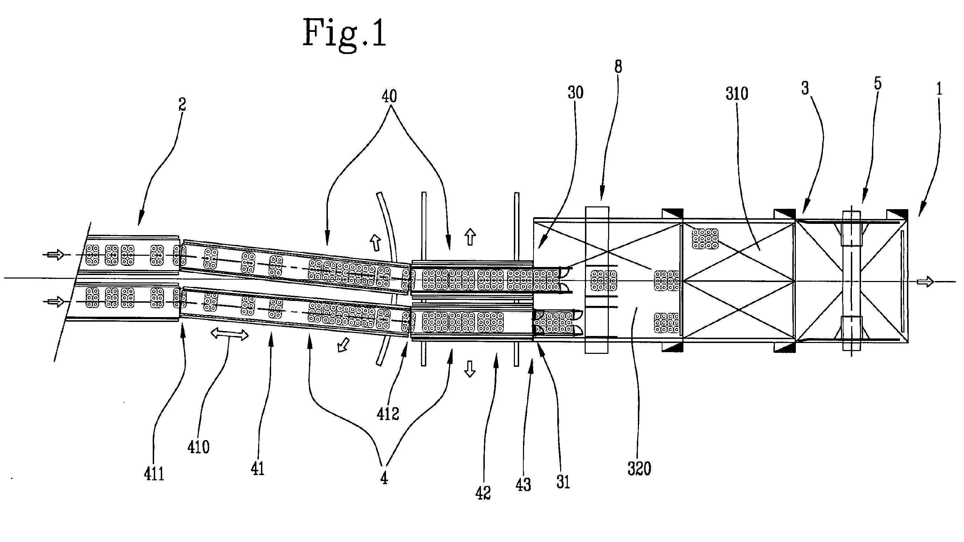

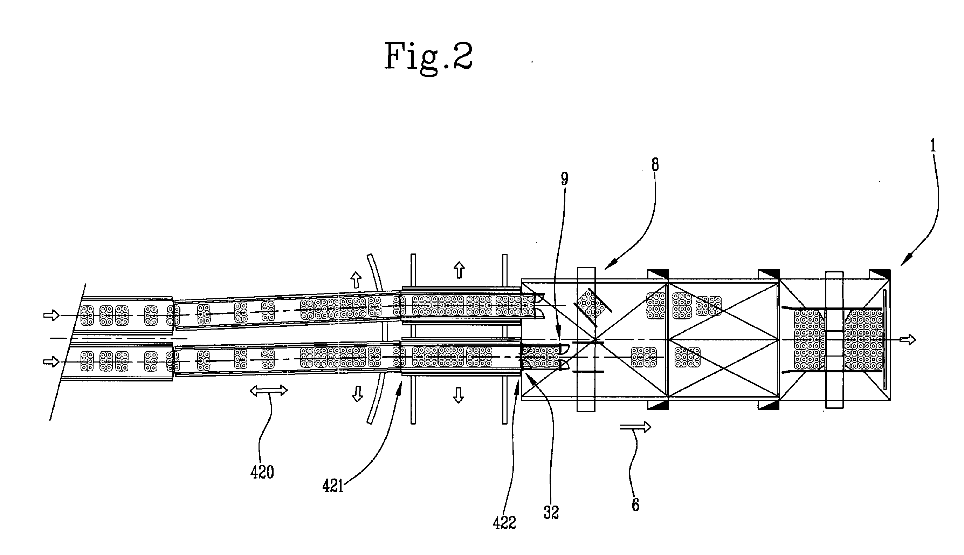

The system 1 comprises a first means 4 for channelling and movement of the packages. The first means 4 for channelling and movement of the packages is substantially interposed between the first and the second supporting and conveying means 2, 3. The first channelling and movement means 4 is therefore located downstream of the first means 2 and upstream of the second means 3 with respect to a direction of advancement of the packages along the system 1. The first channelling and movement means 4 is movable at least between a first and a second configuration. In the first configuration, the first channelling and movement means 4 directs the packages toward a first part 31 of the entrance front 30 (see for example Figure 1 in which the first channelling and movement means 4 unloads the packages in said first part 31). In a second configuration, the first channelling and movement means 4 directs the packages toward a second part 32 of the entrance front 30 (see for example Figure 2 in which the channelling and movement means 4 unloads the packages in the second part 32). The first and the second part 31, 32 of the entrance front 30-are clearly distinct. Therefore, the first channelling and movement means 4 is orientable. The first channelling and movement means 4 permits a continuous flow of packages that may not stop even during the shift between the first and the second configurations.

The first channelling and movement means 4 comprises an unloading zone 43 that moves continuously along the entrance front 30 of the second supporting and conveying means 3 so as to unload the packages in any one zone interposed between two end positions of said front 30. By way of example, but not necessarily, the two end positions could be those positions taken in the first and the second configurations.

The first channelling and movement means 4 comprises a first tract 41 and a second 42.

The second tract 42 is located downstream of the first tract 41. In particular, the second tract 42 immediately follows the first tract 41. In the first configuration of the first channelling and movement means 4, it is therefore the second tract 42 that places the packages at the first part 31 of the front 30; in the second configuration of the first channelling and movement means 4, however, the second tract 42 places the packages at the second part 32 of the front 30.

The first tract 41, in the first configuration, develops preponderantly in a first direction 410 and in the second configuration, it develops preponderantly in a second direction 420. The second direction 420 (identified in the second configuration) is inclined with respect to the first direction 410 (identified in the first configuration). The first tract 41 is therefore orientable. Advantageously, but not necessarily, the maximum acute angle that may be interposed between the first and the second direction 410, 420 is 30 ° .

The second tract 42 is conveniently able to translate horizontally. In particularly, the second tract 42 is able to translate perpendicularly to the feed line for the packages. Preferably, the second tract 42 is able to translate perpendicularly to a direction 6 defined by the advancement of the packages in an initial tract of the second means 3 and/or translate perpendicularly to the direction of advancement of the packages in the tract 42.

Preferably, the second tract 42 is able to translate perpendicularly to a preponderant development direction thereof. The direction 6 of advancement of the packages in the initial tract of the second supporting and conveying means 3 coincides with the direction of advancement of the packages in the second tract 42.

The first tract 41 defines means for tracking into the second tract 42. This means that a shifting of the second tract 42 corresponds to a shifting of the first tract 41. In this manner, the packages exiting the first tract 41 end up in the second tract 42.

The first tract 41 comprises an entrance end 411 and an exit end 412 for the packages; the first tract 41 is able to rotate at/near the entrance end 411; the first tract 41 is able to rotate about a vertical axis. The second tract 42 comprises a first end 421 and a second end 422. The second end 422 is downstream of the first end 421; the exit end 412 of the first tract 41 leads into the first end 421 of the second tract 42.

As illustrated by way of example in the accompanying figures, the preponderant development direction of an end tract of the first supporting and conveying means 2, of an initial tract of the second supporting and conveying means 3 and of the second tract 42 is always parallel to the same direction.

The system 1 comprises a base 7. The first tract 41 is pivoted to the base in the proximity of the entrance end 411. Preferably in the proximity of the exit end 412, the first tract 41 comprises rolling means 71 that permit the shifting thereof. In particular, this rolling means 71 consists of rollers incorporated into the second tract 42 and that are movable on the underlying surface. The exit end 412 for passing from the first to the second configuration traces an arc, typically a circular arc.

The second tract 42 is a dragging device that drags the exit end 412 of the first tract 41. In fact, the exit end 412 of the first tract 41 and the first end 421 of the second tract 42 remain adjacent to each other.

The first tract 41 comprises a conveyor belt that preferably connects the entrance end 411 and the exit end 412; conveniently, the shifting of the first tract 41 (between the first and the second configuration of the first channelling and movement means 4) entails the shifting of the belt conveyor of the first tract 41 (it particularly entails the shifting of the tract of the package feed line involving the first tract 41).

The second tract 42 comprises a conveyor belt that preferably connects the first end 421 and the second end 422. The belt conveyor present in the first tract 41 and the belt conveyor present in the second tract 42 are distinct.

The translation of the second tract 42 perpendicularly to the package feed line entails a similar translation of the belt conveyor present in the second tract 42.

The system 1 conveniently comprises a gate 9, which is closed in a first operating mode and performs the action of restraining the packages, and open in a second operating mode and permits passage of the packages. In combination with means for activating/stopping the conveyor belt of the second tract 42, this gate 9 defines means that meters the packages at the second means 3.

Advantageously, this gate 9 is located in the proximity of the second end 422 of the second tract. 42.

In particular, the gate 9 is movable along the feed line for the packages (by means of suitable motorization).

Conveniently, the gate 9 moves together with the second tract 42, perpendicularly to the feed line for the packages. This results in the packages passing through the gate 9 regardless of the zone of the front 30 in which they are unloaded by the channelling and movement means 4. The gate 9 conveniently comprises two gripping wings that can rotate about corresponding vertical axes of rotation (to permit the opening and closing of the gate 9).

A method for metering the incoming packages in the second supporting and conveying means 3 and coming from the first channelling and movement means 4 is also an object of the present invention. The method comprises the steps consisting of:
- positioning at least one group of one or more packages behind a gate 9 located on the borderline between the channelling and movement means 4 and said second means 3, said group coinciding with a first package or alternatively comprising a pre-established plurality of adjacent packages of the same dimensions and placed in succession along the channelling and movement means 4;
- advancing the gate 9 by a preset length, positioning it above the second means 3. The preset length is equal to the length that said group exhibits along a direction of advancement (when it is found at the gate 9). The step of advancing the gate 9 takes place along with the transfer of the packages from the channelling and movement means 4 to the second means 3;
- stopping the advancement of the packages along at least a final tract of the channelling and movement means 4;
- opening the gate 9, releasing said group from the gate 9.

Advantageously, the system 1 comprises a second means 40 for channelling and movement of the packages. The second channelling and movement means 40 is located alongside the first channelling and movement means 4. Conveniently, the second channelling and movement means 40 operates in parallel with respect to the first channelling and movement means 4. The characteristics described with reference to the first channelling and movement means 4 can also be repeated for the second channelling and movement means 40.

In particular, the second channelling and movement means 40 receives the packages from the first supporting and conveying means 2 (which in this case advantageously comprises two independent lines, one feeding the first channelling and movement means 4 and the other feeding the second channelling and movement means 40). The second channelling and movement means 40 releases the packages onto the second supporting and conveying means 3. Advantageously, the first channelling and movement means 4 releases the packages in a first half of the front 30, whereas the second channelling and movement means 40 releases the packages in a second half of the same front 30. The shifting of the first and the second channelling and movement means 4, 10 is reciprocally independent.

The second supporting and conveying means 3 further comprises an area 8 for possible rotation of the packages (also known in the field as the rotation and preforming area). Rotation of the packages takes place only in the event that such rotation is required for the formation of the desired layout of the layer of packages.

The system 1 conveniently comprises a manipulator comprising a gripper equipped with two arms that are movable in an independent manner. In particular, these two arms are vertically movable. In order to grip the packages, the two arms are conveniently located one in front and one in back of the package, with respect to the direction of advancement of the package.

Downstream of the area 8 for possible rotation of the packages, the conveying means 2 comprises a layer-forming area 80. This area 80 is not described in further detail as it is already known in the prior art. Between the layer-forming area 80 and the area 8 for possible rotation of the packages, the system 1 comprises a stop 81, which if activated, enables the advancing packages to wait for subsequent packages for the purpose of beginning compaction of the layout of the layer.

The system 1 further comprises a compactor 5 located along the second supporting and conveying means 3. The compactor 5 compacts the packages at least perpendicularly to a preponderant development direction of the second supporting and conveying means 3. Calculating the width of the second means 3 and of the second tract 42 perpendicularly to the respective preponderant development direction, the width of the second supporting and conveying means 3 is more than twice that of the second tract 42.

The invention thus conceived makes it possible to achieve many advantages.

In particular, it makes it possible to increase productivity. In fact, the various packages are inserted one after the other in the second means 3 to make it possible for them to move along a pre-established straight line chosen at will. This makes it possible to avoid inserting the packages in a fixed zone which then forces a manipulator to move them one at a time transversely to the direction of advancement for the purpose of creating the desired layout of the layer of packages.

The invention thus conceived is susceptible to numerous modifications and variants, all of which falling within the scope of the inventive concept characterizing the invention. Moreover, all the details may be replaced with technically equivalent elements. All materials used, as well as the dimensions, may in practice be of any type, according to requirements.

## Claims

1. A system for package handling comprising:
- a first means (2) for supporting and conveying packages;
- a second means (3) for supporting and conveying packages and comprising an entrance front (30);
**characterized in that** it comprises:
a first (4) and a second (40) means for channelling and movement of packages, located side by side and operating in parallel, said first means (4) and said second means (40) for channelling and movement being movable at least between a first and a second configuration and being at least partly interposed between the first and the second supporting and conveying means (2, 3); in the first configuration, the first (4) and the second (40) channelling and movement means directing the packages toward a first part (31) of the entrance front (30), in a second configuration, the first (4) and the second (40) channelling and movement means directing the packages toward a second part (32) of the entrance front (30);
a gate (9) located on the border line between said channelling and movement means (4) and said second supporting and conveying means (3), said gate (9) being able to advance along the feed line for the packages by a preset length corresponding to the length of at least a group of one or more packages placed in succession behind said gate (9) along the channelling and movement means (4), said group coinciding with a first package or alternatively comprising a pre-established plurality of adjacent packages of the same dimensions.

2. The system according to claim 1, **characterized in that** the first channelling and movement means (4) comprises an unloading zone (43) that can move along the entrance front (30) so as to unload the packages in any one zone of the front (30) and that is interposed between two end positions.

3. The system according to claim 1 or 2, **characterized in that** the first channelling and movement means (4) comprises a first tract (41) and a second tract (42), the second tract (42) being located downstream of the first tract (41).

4. The system according to claims 3, **characterized in that** the first tract (41) in the first configuration develops preponderantly in a first direction (410) and in the second configuration, it develops preponderantly in a second direction (420), the second direction (420) identified in the second configuration being inclined with respect to the first direction (410) identified in the first configuration.

5. The system according to claim 3 or 4, **characterized in that** the second tract (42) is able to translate horizontally and perpendicularly to a feed line for the packages.

6. The system according to any one of claims 3 to 5, **characterized in that** the first tract (41) defines means for tracking into the second tract (42), a shifting of the second tract (42) corresponding to a shifting of the first tract (41).

7. The system according to any one of claims 3 to 6, **characterized in that** the first tract (41) comprises an entrance end (411) and an exit end (412) for the packages, the first tract (41) being able to rotate at the entrance end (411), the second tract (42) comprising a first end (421) and a second end (422), the second end (422) being downstream of the first end (421) and the exit end (412) of the first tract (41) leading into the first end (421) of the second tract (42).

8. The system according to claim 7, **characterized in that** it comprises a base, the first tract (41) being pivoted to the base at the entrance end (411) and comprising rolling means that facilitate the shifting thereof.

9. The system according to claim 7 or 8, **characterized in that** the second tract (42) is a dragging device that drags the exit end (412) of the first tract (41).

10. The system according to any one of claims 3 to 9, **characterized in that** it comprises a compactor (5) located along the second supporting and conveying means (3) that compacts the packages perpendicularly to a preponderant development direction of the second supporting and conveying means (3); the width of the second supporting and conveying means (3) being more than twice that of the second tract (42), the width of the second means (3) and of the second tract (42) being calculated perpendicularly to the preponderant development direction of the second means (3) and the second tract (42), respectively.

11. The system according to any one of the preceding claims, **characterized in that** an end tract of the first supporting and conveying means (2), an initial tract of the second supporting and conveying means (3), and the second tract (42) always develop parallel to the same direction.

12. The system for forming packages to be palletized, comprising a handling system according to any one of claims 1 to 11.

13. A method for metering the incoming packages in the second supporting and conveying means (3) and coming from the first channelling and movement means (4) in a system according to any one of claims 1 to 12, said method comprising the steps consisting of:
- positioning at least one group of one or more packages behind a gate (9) located on the borderline between the channelling and movement means (4) and said second means (3), said group coinciding with a first package or alternatively comprising a pre-established plurality of adjacent packages of the same dimensions and placed in succession along the channelling and movement means (4);
- advancing the gate (9) by a preset length, positioning it above the second means (3), the preset length being equal to the length that said group exhibits along a direction of advancement, said step taking place along with the transfer of the packages from the channelling and movement means (4) to the second means (3);
- stopping the advancement of the packages along at least a final tract of the channelling and movement means (4);
- opening the gate (9), releasing said group from the gate (9).

## Patentansprüche

1. System zur Handhabung von Verpackungen, umfassend:
- erste Mittel (2) zum Stützen und Befördern von Verpackungen;
- zweite Mittel (3) zum Stützen und Befördern von Verpackungen, umfassend eine Einlaufstirnseite (30), **dadurch gekennzeichnet, dass** es umfasst:
erste (4) und zweite (40) Mittel zum Einschleusen und Bewegen von Verpackungen, aneinander angeordnet und arbeitend im Parallelbetrieb, wobei die ersten Mittel (4) und die zweiten Mittel (40) zum Einschleusen und Bewegen mindestens zwischen einer ersten und einer zweiten Konfiguration beweglich sind und mindestens teilweise zwischen den ersten und den zweiten Mitteln zum Stützen und Befördern (2, 3) eingesetzt sind; wobei die ersten (4) und die zweiten (40) Mittel zum Einschleusen und Bewegen die Verpackungen in der ersten Konfiguration zu einem ersten Teil (31) der Einlaufstirnseite (30) richten, und die ersten (4) und die zweiten (40) Mittel zum Einschleusen und Bewegen die Verpackungen in einer zweiten Konfiguration zu einem zweiten Teil (32) der Einlaufstirnseite (30) richten;
eine Schleuse (9), befindlich an der Grenzlinie zwischen den Mitteln zum Einschleusen und Bewegen (4) und den zweiten Mitteln zum Stützen und Befördern (3), wobei die Schleuse (9) in der Lage ist, entlang der Zuführungslinie für die Verpackungen um eine vorgegebene Länge entsprechend der Länge von mindestens einer Gruppe mit einer oder mehreren Verpackungen, die nacheinander hinter der Schleuse (9) entlang der Mittel zum Einschleusen und Bewegen (4) angeordnet werden, vorgeschoben zu werden, wobei diese Gruppe mit einer ersten Verpackung übereinstimmt oder alternativ eine vorgegebene Vielzahl an aneinandergrenzenden Verpackungen derselben Größe umfasst.

2. System nach Anspruch 1, **dadurch gekennzeichnet, dass** die ersten Mittel zum Einschleusen und Bewegen (4) einen Entladebereich (43) umfassen, der sich entlang der Einlaufstirnseite (30) bewegen kann, sodass die Verpackungen in einem beliebigen Bereich der Stirnseite (30) abgeladen werden, und der sich zwischen zwei Endpositionen befindet.

3. System nach Anspruch 1 oder 2, **dadurch gekennzeichnet, dass** die ersten Mittel zum Einschleusen und Bewegen (4) einen ersten Abschnitt (41) und einen zweiten Abschnitt (42) umfassen, wobei sich der zweite Abschnitt (42) stromabwärts des ersten Abschnitts (41) befindet.

4. System nach Anspruch 3, **dadurch gekennzeichnet, dass** sich der erste Abschnitt (41) in der ersten Konfiguration vorwiegend in eine erste Richtung (410) und in der zweiten Konfiguration vorwiegend in eine zweite Richtung (420) entwickelt, wobei die zweite, in der zweiten Konfiguration identifizierte Richtung (420) im Vergleich zur ersten, in der ersten Konfiguration identifizierten Richtung (410) geneigt ist.

5. System nach Anspruch 3 oder 4, **dadurch gekennzeichnet, dass** der erste Abschnitt (42) in der Lage ist, waagerecht und senkrecht zu einer Zuführungslinie für die Verpackungen zu verfahren.

6. System nach einem der Ansprüche 3 bis 5, **dadurch gekennzeichnet, dass** der erste Abschnitt (41) Mittel zur Verfolgung des zweiten Abschnitts (42) definiert, wobei eine Verschiebung des zweiten Abschnitts (42) einer Verschiebung des ersten Abschnitts (41) entspricht.

7. System nach einem der Ansprüche 3 bis 6, **dadurch gekennzeichnet, dass** der erste Abschnitt (41) ein Einlaufende (411) und ein Auslaufende (412) für die Verpackungen umfasst und der erste Abschnitt (41) in der Lage ist, sich am Einlaufende (411) zu drehen, wobei der zweite Abschnitt (42) ein erstes Ende (421) und ein zweites Ende (422) aufweist und das zweite Ende (422) stromabwärts des ersten Endes (421) angeordnet ist und das Auslaufende (412) des ersten Abschnitts (41) in das erste Ende (421) des zweiten Abschnitts (42) führt.

8. System nach Anspruch 7, **dadurch gekennzeichnet, dass** es ein Gestell umfasst, wobei der erste Abschnitt (41) am Gestell am Einlaufende (411) schwenkbar befestigt ist und Rollmittel umfasst, die dessen Verschiebung erleichtern.

9. System nach Anspruch 7 oder 8, **dadurch gekennzeichnet, dass** es sich beim zweiten Abschnitt (42) um eine Zugvorrichtung handelt, die das Auslaufende (412) des ersten Abschnitts (41) zieht.

10. System nach einem der Ansprüche 3 bis 9, **dadurch gekennzeichnet, dass** es eine Presse (5) umfasst, die entlang der zweiten Mittel zum Stützen und Befördern (3) angeordnet ist, die die Verpackungen senkrecht zu einer vorwiegenden Entwicklungsrichtung der zweiten Mittel zum Stützen und Befördern (3) zusammenpresst, wobei die Breite der zweiten Mittel zum Stützen und Befördern (3) über doppelt so groß ist wie die des zweiten Abschnitts (42), wobei die Breite der zweiten Mittel (3) und des zweiten Abschnitts (42) senkrecht zur vorwiegenden Entwicklungsrichtung jeweils der zweiten Mittel (3) und des zweiten Abschnitts (42) berechnet wird.

11. System nach einem der vorhergehenden Ansprüche, **dadurch gekennzeichnet, dass** sich ein Endabschnitt der ersten Mittel zum Stützen und Befördern (2), ein Anfangsabschnitt der zweiten Mittel zum Stützen und Befördern (3) und der zweite Abschnitt (42) stets parallel in dieselbe Richtung entwickeln.

12. System zur Herstellung von zu palettierenden Verpackungen, umfassend ein Handhabungssystem nach einem der Ansprüche 1 bis 11.

13. Verfahren zum Dosieren der eingehenden Verpackungen in den zweiten Mitteln zum Stützen und Befördern (3) und eingehend von den ersten Mitteln zum Einschleusen und Bewegen (4) in ein System nach einem der Ansprüche 1 bis 12, wobei dieses Verfahren folgende Schritte umfasst:
- Positionieren mindestens einer Gruppe mit einem oder mehreren Verpackungen hinter einer Schleuse (9), befindlich an der Grenzlinie zwischen den Mitteln zum Einschleusen und Bewegen (4) und den zweiten Mitteln (3), wobei die Gruppe mit einer ersten Verpackung übereinstimmt oder alternativ eine vorgegebene Vielzahl an aneinandergrenzenden Verpackungen derselben Größe umfasst, die nacheinander entlang der Mittel zum Einschleusen und Bewegen (4) angeordnet sind;
- Vorschub der Schleuse (9) um eine vorgegebene Länge, wobei diese über den zweiten Mitteln (3) positioniert wird und die vorgegebene Länge gleich der Länge ist, die diese Gruppe entlang einer Vorschubrichtung aufweist, wobei dieser Schritt zusammen mit der Übergabe der Verpackungen von den Mitteln zum Einschleusen und Bewegen (4) an die zweiten Mittel (3) stattfindet;
- Anhalten des Vorschubs der Verpackungen entlang eines mindestens abschließenden Abschnitts der Mittel zum Einschleusen und Bewegen (4);
- Öffnen der Schleuse (9) und Freigabe der Gruppe aus der Schleuse (9).

## Revendications

1. Système de manipulation d'emballages comprenant :
- un premier moyen (2) servant à supporter et à acheminer les emballages ;
- un second moyen (3) servant à supporter et à acheminer des emballages et comprenant un front d'entrée (30) ; **caractérisé en ce qu'**il comprend :
un premier (4) et un second (40) moyen servant à canaliser et au déplacement d'emballages, situés côte à côte et fonctionnant en parallèle, ledit premier moyen (4) et ledit second moyen (40) servant à canaliser et au déplacement pouvant se déplacer au moins entre une première et une seconde configuration et étant au moins en partie interposés entre le premier et le second moyen de support et d'acheminement (2, 3) ; dans la première configuration, le premier (4) et le second (40) moyen de canalisation et de déplacement dirigeant les emballages vers une première partie (31) du front d'entrée (30), dans une seconde configuration,
le premier (4) et le second (40) moyen de canalisation et de déplacement dirigeant les emballages vers une seconde partie (32) du front d'entrée (30) ;
Une porte (9) située à la limite entre ledit moyen de canalisation et de déplacement (4) et ledit second moyen de support et d'acheminement (3), ladite porte (9) pouvant avancer le long de la ligne d'alimentation des emballages d'une longueur préétablie correspondant à la longueur d'au moins un groupe d'un ou plusieurs emballages placés les uns à la suite des autres derrière ladite porte (9) le long du moyen de canalisation et de déplacement (4), ledit groupe coïncidant avec un premier emballage ou comprenant alternativement une pluralité préétablie d'emballages adjacents aux dimensions identiques.

2. Système selon la revendication 1, **caractérisé en ce que** le premier moyen de canalisation et de déplacement (4) comprend une zone de déchargement (43) pouvant se déplacer le long du front d'entrée (30) de manière à décharger les emballages dans n'importe quelle zone du front (30) et étant interposée entre deux positions d'extrémité.

3. Système selon les revendications 1 ou 2, **caractérisé en ce que** le premier moyen de canalisation et de déplacement (4) comprend une première section (41) et une seconde section (42), la seconde section (42) étant localisée en aval de la première section (41).

4. Système selon la revendication 3, **caractérisé en ce que** la première section (41), dans la première configuration, se développe principalement dans une première direction (410) et, dans la seconde configuration, se développe principalement dans une seconde direction (420), la seconde direction (420) identifiée dans la seconde configuration étant inclinée par rapport à la première direction (410) identifiée dans la première configuration.

5. Système selon les revendications 3 ou 4, **caractérisé en ce que** la seconde section (42) peut se déplacer horizontalement et perpendiculairement par rapport à la ligne d'alimentation des emballages.

6. Système selon l'une quelconque des revendications de 3 à 5, **caractérisé en ce que** la première section (41) définit un moyen de suivi de la seconde section (42), un déplacement de la seconde section (42) correspondant à un déplacement de la première section (41).

7. Système selon l'une quelconque des revendications de 3 à 6, **caractérisé en ce que** la première section (41) comprend une extrémité d'entrée (411) et une extrémité de sortie (412) destinées aux emballages, la première section (41) pouvant tourner au niveau de l'extrémité d'entrée (411), la seconde section (42) comprenant une première extrémité (421) et une seconde extrémité (422), la seconde extrémité (422) étant située en aval de la première extrémité (421) et l'extrémité de sortie (412) de la première section (41) conduisant à la première extrémité (421) de la seconde section (42).

8. Système selon la revendication 7, **caractérisé en ce qu'**il comprend une base, la première section (41) étant pivotante par rapport à la base au niveau de l'extrémité d'entrée (411) et comprenant des moyens de roulement facilitant son déplacement.

9. Système selon les revendications 7 ou 8, **caractérisé en ce que** la seconde section (42) est un dispositif d'entraînement entraînant l'extrémité de sortie (412) de la première section (41).

10. Système selon l'une quelconque des revendications précédentes de 3 à 9, **caractérisé en ce qu'**il comprend un compacteur (5) situé le long du second moyen de support et d'acheminement (3) qui compacte les emballages perpendiculairement à une direction de développement principale du second moyen de support et d'acheminement (3) ; la largeur du second moyen de support et d'acheminement (3) représentant plus du double de celle de la seconde section (42), la largeur du second moyen (3) et de la seconde section (42) étant respectivement calculée perpendiculairement à la direction de développement principale du second moyen (3) et de la seconde section (42).

11. Système selon l'une quelconque des revendications précédentes, **caractérisé en ce qu'**une section d'extrémité du premier moyen de support et d'acheminement (2), une section initiale du second moyen de support et d'acheminement (3) et la seconde section (42) se développent toujours parallèlement à la même direction.

12. Système servant à former des emballages à mettre sur palettes, comprenant un système de manipulàtion selon l'une quelconque des revendications de 1 à 11.

13. Procédé de dosage des emballages entrants dans le second moyen de support et d'acheminement (3) et provenant du premier moyen de canalisation et de déplacement (4) dans un système selon l'une quelconque des revendications de 1 à 12, ledit procédé comprenant les étapes consistant à :
- positionner au moins un groupe d'un ou plusieurs emballages derrière une porte (9) située à la limite entre le moyen de canalisation et d'acheminement (4) et ledit second moyen (3), ledit groupe coïncidant avec un premier emballage ou alternativement comprenant une pluralité préétablie d'emballages adjacents de dimensions identiques et placés les uns à la suite des autres le long du moyen de canalisation et d'acheminement(4) ;
- faire avancer la porte (9) d'une longueur préréglée, en la positionnant au-dessus du second moyen (3), la longueur préréglée étant égale à la longueur que ledit groupe présente le long d'une direction de progression, ladite étape ayant lieu le long du transfert des emballages à partir du moyen de canalisation et de déplacement (4) au second moyen (3) ;
- interrompre la progression des emballages le long d'au moins une section finale du moyen de canalisation et de déplacement (4) ;
- ouvrir la porte (9), libérant ledit groupe de la porte (9).
